# EUROPÄISCHE PATENTANMELDUNG

(11) **EP 4 741 224 A1**
(43) Veröffentlichungstag der Anmeldung: **13.05.2026**
(21) Anmeldenummer: 24212240.6
(22) Anmeldetag: 11.11.2024
(51) Int. Cl.: B60N 2/02, B60N 2/06, F16H 57/039

(54) **ZAHNRADBAUGRUPPE, GETRIEBE SOWIE VERSTELLVORRICHTUNG FÜR EIN KRAFTFAHRZEUG**

(71) Anmelder: IMS Gear SE & Co. KGaA, 78166 Donaueschingen (DE)
(72) Erfinder: Fuchs, Gabriel, 78086 Brigachtal (DE); Hengstler, Manuel, 78112 St. Georgen (DE); Weinert, Johannes, 78054 Villingen-Schwenningen (DE)
(74) Vertreter: Westphal, Mussgnug & Partner Patentanwälte mbB

(57) **Zusammenfassung**

Zahnradbaugruppe (10) mit einem Zahnrad (14) und mindestens einer Anlaufscheibe (30, 32) mit einer im Wesentlichen kreisringförmigen Anlauffläche (54), wobei das Zahnrad (14) eine Drehachse (16) und eine um die Drehachse (16) umlaufende Verzahnung (18) mit in einer Umfangsrichtung (20) um die Drehachse (16) abwechselnd angeordneten Zähnen (22) und Zahnlücken (24) aufweist, wobei die Verzahnung (18) mindestens eine axiale Stirnseite (34, 36) mit einer um die Drehachse (16) umlaufenden Aussparung (38) aufweist, wobei die mindestens eine Anlaufscheibe (30, 32) mindestens einen radial über die Anlauffläche (54) vorstehenden Scheibenvorsprung (56) aufweist, und derart in der Aussparung (38) angeordnet ist, dass der mindestens eine Scheibenvorsprung (56) jeweils in eine der Zahnlücken (24) radial eingreifend angeordnet ist, sowie Getriebe (72) mit einer Zahnradbaugruppe (10), sowie Verstellvorrichtung für ein Kraftfahrzeug, insbesondere für einen Kraftfahrzeugsitz.

## Beschreibung

Die Erfindung betrifft eine Zahnradbaugruppe, ein Getriebe mit einer derartigen Zahnradbaugruppe sowie eine Verstellvorrichtung für ein Kraftfahrzeug.

Zur elektromotorischen Längsverstellung von Sitzen in Kraftfahrzeugen werden häufig Sitzlängsverstellvorrichtungen eingesetzt. Die Sitzlängsverstellvorrichtungen weisen häufig ein Spindelgetriebe auf, mittels dessen Drehzahl und Drehmoment zwischen einer Getriebeschnecke und einer Getriebespindel übertragen werden. Dafür ist auf der Getriebespindel eine Spindelmutter angeordnet, die ihrerseits wiederum einen Zahnkranz mit einer Außenverzahnung aufweist, der mit der Getriebeschnecke im Eingriff steht.

Zur Lagerung der Spindelmutter werden üblicherweise Gleitlager eingesetzt, die auf axial benachbart zu der Außenverzahnung angeordneten Lagersitzen der Spindelmutter angeordnet sind. Insbesondere bei einer als Schrägverzahnung ausgebildeten Au-βenverzahnung ist es erforderlich, die Spindelmutter mit Blick auf die auftretenden Axialkräfte in axialer Richtung angemessen zu lagern. An der Spindelmutter muss daher eine axiale Anlauffläche bereitgestellt werden, die zur Ausbildung eines Gleitkontakts mit einem Gleitlager ausgebildet ist. Um an den axialen Stirnseiten der Außenverzahnung eine derartige Anlauffläche bereitzustellen, ist es Stand der Technik, die axial offene Außenverzahnung mit einer Anlaufscheibe abzudecken. Damit sich dabei der Gleitkontakt definiert zwischen dem Gleitlager und der Anlaufscheibe ausbildet, muss die Anlaufscheibe drehfest an der Spindelmutter angeordnet sein. Dabei sind verschiedene Lösungen bekannt, um die Anlaufscheibe gegenüber der Spindelmutter gegen Verdrehen zu sichern.

So schlägt die DE 10 2013 207 665 A1 vor, die Anlaufscheibe auf die Spindelmutter aufzupressen. Nachteilig daran ist allerdings, dass durch das Aufpressen zu Spanabhub und einer Verformung der Anlaufscheibe führen kann. Beides kann einen vorzeitigen Ausfall des Getriebes zur Folge haben.

Aus der KR 101 920 222 B1 ist es bekannt, eine Anlaufscheibe mit einem axialen Vorsprung vorzusehen, der in axialer Richtung zwischen zwei Zähne der Außenverzahnung eingreifen kann. Nachteilig an dieser Lösung ist, dass die Fertigung der Anlaufscheibe verhältnismäßig aufwändig ist.

Die in der DE 103 62 040 B4 gezeigte Anlaufscheibe weist einen radialen Vorsprung auf, der nach dem Anordnen der Anlaufscheibe auf der Spindelmutter in axiale Richtung umgebogen wird und so in axialer Richtung zwischen zwei Zähne der Außenverzahnung eingreifen kann. Als nachteilig an diesem System hat sich herausgestellt, dass beim Anordnen der Anlaufscheibe auf der Spindelmutter ein zusätzlicher Fertigungsschritt zum Umbiegen des radialen Vorsprungs erforderlich ist.

Der Erfindung liegt daher die Aufgabe zugrunde, eine Zahnradbaugruppe bereitzustellen, bei der die Anlaufscheibe einfach und sicher an der Stirnseite der Verzahnung anordenbar ist. Der Erfindung liegen ferner die Aufgaben zugrunde, ein entsprechendes Getriebe sowie eine entsprechende Verstellvorrichtung für ein Kraftfahrzeug bereitzustellen.

Die Aufgaben werden erfindungsgemäß gelöst durch eine Zahnradbaugruppe mit den Merkmalen des Patentanspruchs 1, ein Getriebe mit den Merkmalen des Patentanspruchs 12 sowie eine Verstellvorrichtung mit den Merkmalen des Patentanspruchs 15.

Vorteilhafte Ausgestaltungen und Weiterbildungen der Erfindung sind in den abhängigen Ansprüchen angegeben.

Eine erfindungsgemäße Zahnradbaugruppe umfasst ein Zahnrad und mindestens eine Anlaufscheibe mit einer im Wesentlichen kreisringförmigen Anlauffläche, wobei das Zahnrad eine Drehachse und eine um die Drehachse umlaufende Verzahnung mit in einer Umfangsrichtung um die Drehachse abwechselnd angeordneten Zähnen und Zahnlücken aufweist, wobei die Verzahnung mindestens eine axiale Stirnseite mit einer um die Drehachse umlaufenden Aussparung aufweist. Jeder der Zähne kann damit einen ersten Abschnitt und einen bezüglich des ersten Abschnitts axial zurückversetzten zweiten Abschnitt aufweisen. Die Verzahnung ist vorzugsweise radial einerseits durch einen Fußkreisdurchmesser und andererseits durch einen Kopfkreisdurchmesser begrenzt. Die Aussparung kann somit von den Zahnlücken geschnitten sein. Vorzugsweise ist die Verzahnung als Außenverzahnung ausgebildet, sodass die Verzahnung vorzugsweise radial nach außen durch den Kopfkreisdurchmesser und radial nach innen durch den Fußkreisdurchmesser begrenzt ist. Sofern nicht anders angegeben, beziehen sich die Begriffe "radial" und "axial" hier und im Folgenden auf die Drehachse.

Erfindungsgemäß weist die mindestens eine Anlaufscheibe mindestens einen radial über die Anlauffläche vorstehenden Scheibenvorsprung auf, und ist derart in der Aussparung angeordnet, dass der mindestens eine Scheibenvorsprung jeweils in eine der Zahnlücken radial eingreifend angeordnet ist. Dadurch kann die mindestens eine Anlaufscheibe einfach herstellbar sein und in einem Fertigungsschritt gegen Verdrehen gesichert auf dem Zahnrad angeordnet werden. Die mindestens eine Anlaufscheibe kann damit so an dem Zahnrad angeordnet sein, dass sich der mindestens eine Scheibenvorsprung an einer an die Aussparung radial angrenzenden Zahnflanke abstützt. Seitens des Zahnrads ist somit keine zusätzliche Sicherungsstruktur, wie beispielsweise eine, insbesondere axiale, Sicherungsnut erforderlich. Vorzugsweise ist der mindestens eine Scheibenvorsprung jeweils ausschließlich radial eingreifend in eine der Zahnlücken angeordnet. Die Beschreibung der Anlauffläche als im Wesentlichen kreisringförmig beschreibt, dass insbesondere ein Vorsprungfreistich des mindestens einen Scheibenvorsprungs die Anlauffläche schneiden kann.

Vorzugsweise weist die mindestens eine Stirnseite mindestens einen die Aussparung radial begrenzenden Absatz auf. Der mindestens eine Absatz ist vorzugsweise kreisringförmig ausgebildet. Vorzugsweise weist die mindestens eine Stirnseite genau einen Absatz auf.

Der mindestens eine Absatz weist bevorzugt einen Absatzdurchmesser auf, wobei der Absatzdurchmesser besonders bevorzugt kleiner als der Kopfkreisdurchmesser der Verzahnung und größer als der Fußkreisdurchmesser der Verzahnung ausgebildet ist. Der Absatz kann damit von Zahnlücken geschnitten sein.

Der mindestens eine Absatz kann die Aussparung radial nach innen und/oder die Aussparung radial nach außen begrenzend angeordnet sein. Vorzugsweise ist der mindestens eine Scheibenvorsprung entsprechend der Anordnung des mindestens einen Absatzes radial nach innen und/oder radial nach außen über die Anlauffläche vorstehend ausgebildet. Besonders bevorzugt ist der mindestens eine Absatz die Aussparung ausschließlich nach innen begrenzend angeordnet. In diesem Fall ist der jeweilige erste Abschnitt der Zähne radial innerhalb des jeweiligen zweiten Abschnitts der Zähne angeordnet.

Die Verzahnung kann eine Zahnhöhe und der mindestens eine Absatz kann eine Absatzhöhe aufweisen, wobei das Verhältnis der Absatzhöhe zu der Zahnhöhe 0,05 bis 0,3 und bevorzugt 0,05 bis 0,15 beträgt. Unter der Zahnhöhe wird hier und im Folgenden vorzugsweise die Differenz aus dem Kopfkreisdurchmesser und dem Fußkreisdurchmesser verstanden. Die Absatzhöhe bezeichnet in entsprechender Weise hier und im Folgenden vorzugsweise die Differenz aus dem Absatzdurchmesser und dem Fußkreisdurchmesser für den Fall, dass die Verzahnung als Außenverzahnung ausgebildet ist, bzw. die Differenz aus dem Absatzdurchmesser und dem Kopfkreisdurchmesser für den Fall, dass die Verzahnung als Innenverzahnung ausgebildet ist. Eine axiale Absatzbreite des mindestens einen Absatzes entspricht vorzugsweise im Wesentlichen einer axialen Scheibenbreite der mindestens einen Anlaufscheibe.

In einer bevorzugten Ausführungsform der Erfindung sind das Zahnrad und die mindestens eine Anlaufscheibe miteinander ausschließlich formschlüssig wirkverbunden. Dabei kann die mindestens eine Anlaufscheibe gegenüber dem Zahnrad radiales und axiales Spiel aufweisen. Damit liegt vorzugsweise kein Reibschluss zwischen der mindestens einen Anlaufscheibe und dem Zahnrad vor. Damit kann insbesondere das Anordnen der mindestens einen Anlaufscheibe auf dem Zahnrad ohne Spanabhub oder Verformung der mindestens einen Anlaufscheibe erfolgen.

In einer Weiterbildung der Erfindung ist eine Vorsprungkontur des mindestens einen Scheibenvorsprungs zumindest abschnittsweise mathematisch ähnlich zu einer Lückenkontur einer der Zahnlücken ausgebildet. Damit kann die Beweglichkeit der mindestens einen Anlaufscheibe gegenüber dem Zahnrad, insbesondere in der Umfangsrichtung, reduziert werden. Vorzugsweise ist die Vorsprungkontur ähnlich zu dem Abschnitt der Lückenkontur, in den der Scheibenvorsprung eingreifend angeordnet ist. Die Vorsprungkontur kann insbesondere derart ähnlich ausgebildet sein, dass sie im Vergleich zu dem entsprechenden Abschnitt der Lückenkontur zentrisch gestaucht ausgebildet ist. Damit kann ein angemessenes Spiel der mindestens einen Anlaufscheibe gegenüber dem Zahnrad erreicht werden.

Die mindestens eine Anlaufscheibe kann mehrere Scheibenvorsprünge aufweisen. Jeder der Scheibenvorsprünge weist dabei vorzugsweise die zuvor beschriebenen Merkmale des mindestens einen Scheibenvorsprungs auf. Vorzugsweise weist die mindestens eine Anlaufscheibe drei bis neun der Scheibenvorsprünge auf. Besonders bevorzugt sind die Scheibenvorsprünge in Umfangsrichtung regelmäßig beabstandet zueinander angeordnet.

In einer Weiterbildung der Erfindung weist das Zahnrad mindestens einen zur Verzahnung axial benachbart angeordneten Radiallagersitz auf. Vorzugsweise ist der mindestens eine Radiallagersitz axial angrenzend an die Verzahnung angeordnet, wobei zwischen der Verzahnung und dem Radiallagersitz ein Lagersitzfreistich angeordnet sein kann. Der mindestens eine Radiallagersitz ist vorzugsweise zylindrisch ausgebildet. Vorzugsweise ist das Zahnrad einstückig ausgebildet.

Gemäß einer bevorzugten Ausführungsform ist das Zahnrad als Spindelmutter ausgebildet. Vorzugsweise weist die Spindelmutter eine entlang der Drehachse ausgebildete und ein Gewinde aufweisende Durchgangsbohrung zur Aufnahme einer Gewindespindel auf.

In einer Weiterbildung der Erfindung ist eine erste Anlaufscheibe der mindestens einen Anlaufscheibe an einer ersten Stirnseite der mindestens einen Stirnseite angeordnet, und eine zweite Anlaufscheibe der mindestens einen Anlaufscheibe ist an einer zweiten Stirnseite der mindestens einen Stirnseite angeordnet, wobei die zweite Stirnseite der ersten Stirnseite axial gegenüberliegend angeordnet ist. So kann das Zahnrad beidseits der Verzahnung axial gelagert werden.

Ein erfindungsgemäßes Getriebe, insbesondere für eine Verstellvorrichtung für ein Kraftfahrzeug, umfasst die zuvor beschriebene Zahnradbaugruppe.

Das Getriebe weist vorzugsweise mindestens ein Gleitlager auf, wobei das mindestens eine Gleitlager einen Axiallagerabschnitt aufweist, der axial anliegend an der Anlauffläche der mindestens einen Anlaufscheibe angeordnet ist. So können auf das Zahnrad wirkende Axialkräfte über die mindestens eine Anlaufscheibe und das Gleitlager abgestützt werden. Der Axiallagerabschnitt kann mit einer axial gegenüber der Anlauffläche angeordneten Lagerrückseite an einem Getriebegehäuse des Getriebes angeordnet sein.

In einer bevorzugten Ausführungsform weist das mindestens eine Gleitlager einen rechtwinklig zu dem Axiallagerabschnitt ausgebildeten Radiallagerabschnitt auf, wobei der Radiallagerabschnitt anliegend an dem mindestens einen Radiallagersitz angeordnet ist, und wobei
- ein Axialinnendurchmesser des Axiallagerabschnitts größer/gleich einem Anlaufflächeninnendurchmesser der Anlauffläche ist, und/oder
- ein Axialaußendurchmesser des Axiallagerabschnitts kleiner/gleich einem Anlaufflächenaußendurchmesser der Anlauffläche ist.

Der Axialinnendurchmesser und der Axialaußendurchmesser begrenzen dabei vorzugsweise die Kontaktfläche des mindestens einen Gleitlagers, die für den Kontakt mit der Schnittstelle eines axial zu lagernden Gegenstands, insbesondere der Anlauffläche der mindestens einen Anlaufscheibe, vorgesehen sind. Im Halbschnitt kann das mindestens eine Gleitlager L-förmig ausgebildet sein. Das mindestens eine Gleitlager kann derart ausgebildet sein, dass der Radiallagerabschnitt und Axiallagerabschnitt jeweils angrenzend an eine den Radiallagerabschnitt mit dem Axiallagerabschnitt verbindende Fase angeordnet sind.

Eine erfindungsgemäße Verstellvorrichtung für ein Kraftfahrzeug, insbesondere für einen Kraftfahrzeugsitz, umfasst das zuvor beschriebene Getriebe. Vorzugsweise ist die Verstellvorrichtung als Sitzlängsverstellvorrichtung, insbesondere für einen Kraftfahrzeugsitz ausgebildet.

Ausführungsbeispiele der Erfindung werden anhand der nachfolgenden Figuren erläutert. Es zeigt:
- Figur 1: eine perspektivische Ansicht eines Ausführungsbeispiels einer Zahnradbaugruppe mit einer Spindelmutter und zwei Anlaufscheiben,
- Figur 2: eine stirnseitige Seitenansicht des in Fig. 1 gezeigten Ausführungsbeispiels mit eingezeichneter Schnittebene C-C,
- Figur 3: eine Schnittansicht des in Fig. 1 gezeigten Ausführungsbeispiels entlang der in Fig. 2 eingezeichneten Schnittebene C-C,
- Figur 4: eine perspektivische Ansicht der Spindelmutter des in Fig. 1 dargestellten Ausführungsbeispiels,
- Figur 5: eine stirnseitige Seitenansicht der in Fig. 4 gezeigten Spindelmutter mit eingezeichneter Schnittebene A-A,
- Figur 6: eine Schnittansicht der in Fig. 4 gezeigten Spindelmutter entlang der in Fig. 5 eingezeichneten Schnittebene A-A,
- Figur 7: eine perspektivische Ansicht einer der Anlaufscheiben des in Fig. 1 dargestellten Ausführungsbeispiels,
- Figur 8: eine perspektivische Ansicht eines Ausführungsbeispiels eines Getriebes mit einer Spindelmutter und einer Drehachse,
- Figur 9: eine Längsschnitt des in Fig. 8 gezeigten Ausführungsbeispiels entlang der Drehachse.

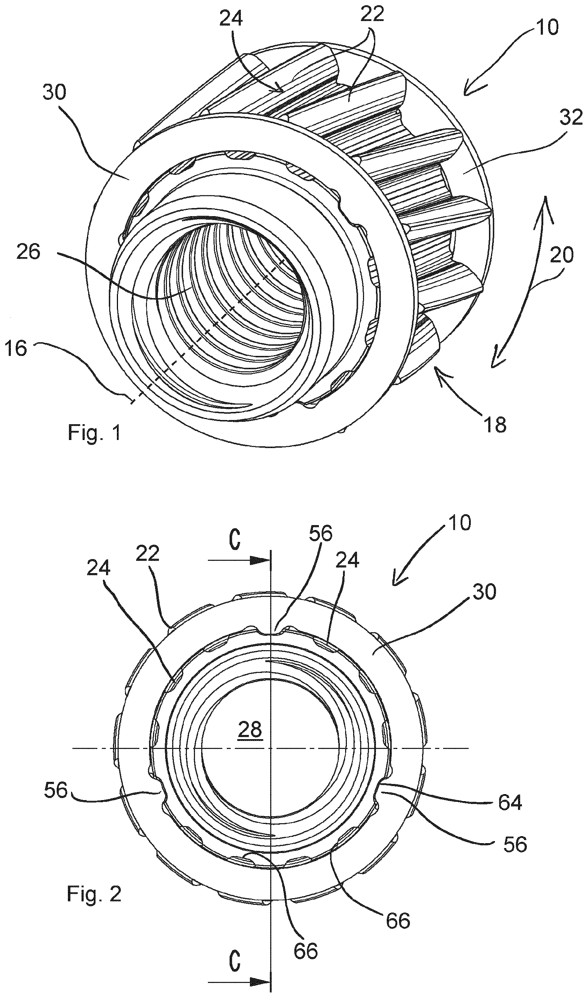

Die Figuren 1 bis 9 zeigen verschiedene Ausführungsbeispiele. Für gleiche und funktionsgleiche Teile werden die gleichen Bezugszeichen verwendet. Der Übersichtlichkeit halber werden nicht alle Bezugszeichen in jeder Figur verwendet.

Die Fig. 1 zeigt eine perspektivische Ansicht einer Zahnradbaugruppe 10 mit einer als Spindelmutter 12 ausgebildetem Zahnrad 14. Die Spindelmutter 12 weist eine Drehachse 16 und eine um die Drehachse 16 umlaufende Verzahnung 18 mit in einer Umfangsrichtung 20 um die Drehachse 16 abwechselnd angeordneten Zähnen 22 und Zahnlücken 24 auf. Die Verzahnung 18 ist dabei als Außenverzahnung ausgebildet. Die Spindelmutter 12 weist darüber hinaus eine entlang der Drehachse 16 ausgebildete und ein Gewinde 26 aufweisende Durchgangsbohrung 28 zur Aufnahme einer Gewindespindel auf. Wie die Fig. 1 ferner zeigt, umfasst die Zahnradbaugruppe 10 eine erste Anlaufscheibe 30 und eine zweite Anlaufscheibe 32.

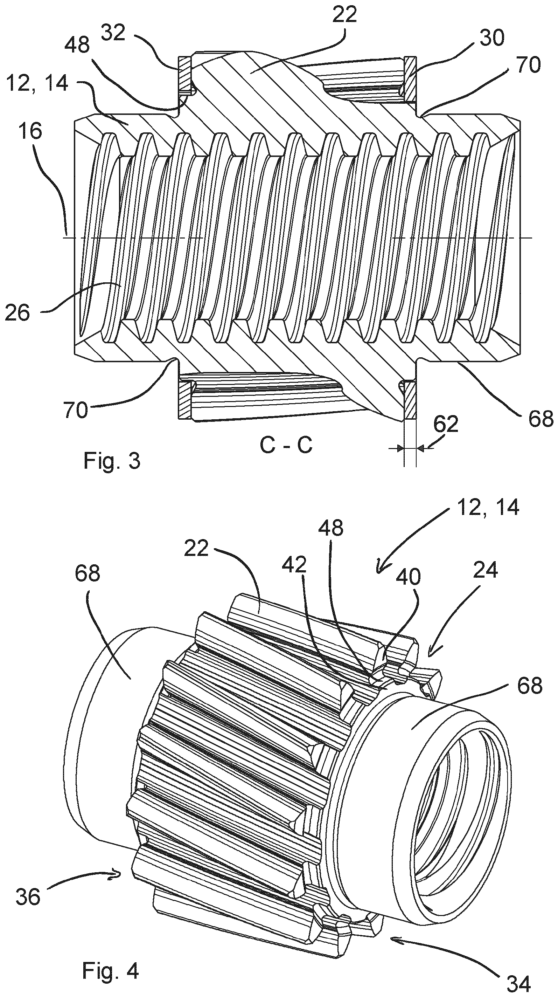

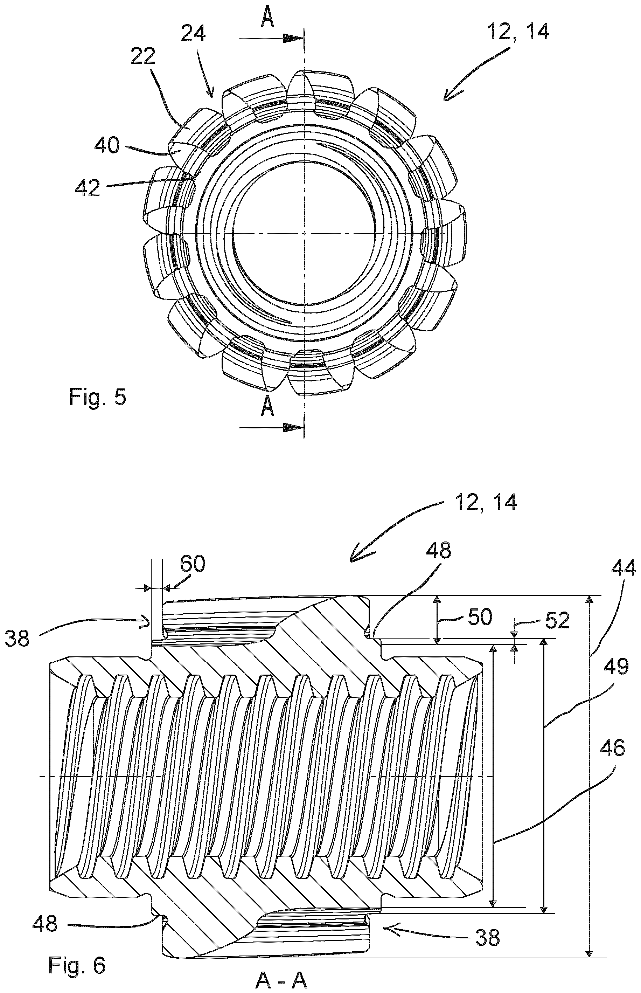

Die Fig. 4-6 zeigen eine separate Darstellung der Spindelmutter 12. Daraus ist ersichtlich, dass die Verzahnung 18 eine axiale erste Stirnseite 34 und eine der ersten Stirnseite 34 gegenüberliegend angeordnete axiale zweite Stirnseite 36 aufweist. Die erste Stirnseite 34 und die zweite Stirnseite 36 weisen jeweils eine um die Drehachse 16 umlaufenden Aussparung 38 auf. Jeder der Zähne 22 kann damit einen ersten Abschnitt 40 und einen bezüglich des ersten Abschnitts 40 axial zurückversetzten zweiten Abschnitt 42 aufweisen. Die Verzahnung 18 ist radial nach außen durch einen Kopfkreisdurchmesser 44 und radial nach innen durch einen Fußkreisdurchmesser 46 begrenzt (Fig. 6). Die Fig. 4 veranschaulicht, dass insofern die jeweilige Aussparung 38 somit von den Zahnlücken 24 geschnitten ist.

Insbesondere die Fig. 4 u. 6 zeigen, dass jede der Stirnseiten 34, 36 einen kreisringförmigen, die jeweilige Aussparung 38 radial begrenzenden Absatz 48 aufweist. Der Absatz 48 weist einen Absatzdurchmesser 49 auf, der kleiner als der Kopfkreisdurchmesser 44 und größer als der Fußkreisdurchmesser 46 ausgebildet ist. Der Absatz 48 ist somit von den Zahnlücken 24 geschnitten.

An beiden Stirnseiten 34, 36 ist der Absatz 48 die Aussparung 38 radial nach innen begrenzend angeordnet. Dabei begrenzt der Absatz 48 die Aussparung 38 ausschließlich radial nach innen. Dementsprechend ist der jeweilige erste Abschnitt 40 der Zähne 22 radial innerhalb des jeweiligen zweiten Abschnitts 42 der Zähne 22 angeordnet.

Wie Fig. 6 zeigt, weist die Verzahnung 18 eine Zahnhöhe 50 und der Absatz 48 eine Absatzhöhe 52 auf, wobei das Verhältnis der Absatzhöhe 52 zu der Zahnhöhe 50 0,05 bis 0,3 und bevorzugt 0,05 bis 0,15 beträgt. Die Darstellung in Fig. 6 veranschaulicht außerdem, dass im gezeigten Ausführungsbeispiel die Zahnhöhe 50 der Differenz aus dem Kopfkreisdurchmesser 44 und dem Fußkreisdurchmesser 46 und die Absatzhöhe 52 der Differenz aus dem Absatzdurchmesser 49 und dem Fußkreisdurchmesser 46 entspricht.

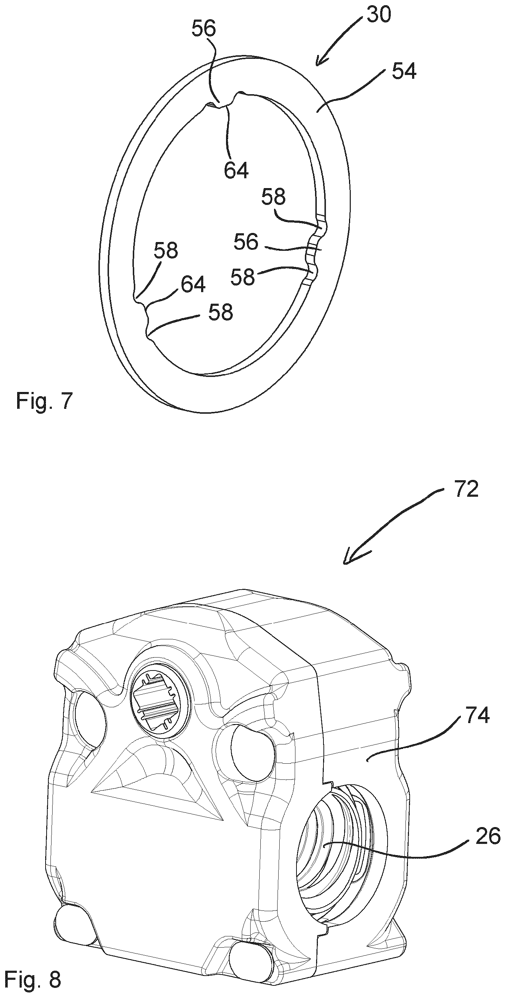

Eine separate Darstellung der ersten Anlaufscheibe 30 findet sich in Fig. 7. Die erste Anlaufscheibe 30 und die zweite Anlaufscheibe 32 sind vorzugsweise identisch ausgebildet. Wie zudem aus den Fig. 1 u. 2 erkennbar ist, weisen die erste Anlaufscheibe 30 und die zweite Anlaufscheibe 32 jeweils eine im Wesentlichen kreisringförmigen Anlauffläche 54, sowie jeweils drei radial nach innen über die Anlauffläche 54 vorstehende Scheibenvorsprünge 56 auf. Dabei schneiden Vorsprungfreistiche 58 der Scheibenvorsprünge 56 radial in die Anlauffläche 54.

Die erste Anlaufscheibe 30 ist derart in der Aussparung 38 der ersten Stirnseite 34 angeordnet, dass jeder der Scheibenvorsprünge 56 jeweils in eine der Zahnlücken 24 radial eingreifend angeordnet ist. Die Anlaufscheiben 30, 32 sind damit so an der Spindelmutter 12 angeordnet, dass sich die Scheibenvorsprünge 56 an einer an die jeweilige Aussparung 38 radial angrenzende Zahnflanke abstützt. Wie die Schnittdarstellung in Fig. 3 zeigt, sind die Scheibenvorsprünge 56 ausschließlich radial eingreifend in jeweils eine der Zahnlücken 24 angeordnet. Aus der Darstellung in Fig. 3 ist zudem ersichtlich, dass eine axiale Absatzbreite 60 des jeweiligen Absatzes 48 im Wesentlichen einer axialen Scheibenbreite 62 der jeweiligen Anlaufscheibe 30, 32.

Die Spindelmutter 12 und die Anlaufscheiben 30, 32 sind miteinander ausschließlich formschlüssig wirkverbunden. Dabei können die Anlaufscheiben 30, 32 gegenüber der Spindelmutter 12 radiales und axiales Spiel aufweisen.

Jeder der Scheibenvorsprünge 56 weist eine Vorsprungkontur 64 auf (siehe Fig. 7). Aus der Darstellung in Fig. 2 ist ersichtlich, dass die Vorsprungkontur 64 zumindest abschnittsweise mathematisch ähnlich zu einer Lückenkontur 66 die jede der Zahnlücken 26 aufweist. Die Vorsprungkontur 64 ist dabei ähnlich zu dem Abschnitt der Lückenkontur 66, in den der jeweilige Scheibenvorsprung 56 eingreifend angeordnet ist. Insbesondere ist die Vorsprungkontur 64 derart ähnlich ausgebildet, dass sie im Vergleich zu dem entsprechenden Abschnitt der Lückenkontur 66 zentrisch gestaucht ausgebildet ist. Damit kann ein angemessenes Spiel der Anlaufscheiben 30, 32 gegenüber der Spindelmutter 12 erreicht werden.

Wie insbesondere die Fig. 1, 3, 4 u. 6 zeigen, weist die Spindelmutter 12 zur Verzahnung 18 beidseitig axial benachbart angeordnete Radiallagersitze 68 auf. Die Radiallagersitze 68 sind jeweils axial angrenzend an die Verzahnung 18 angeordnet, wobei zwischen der Verzahnung 18 und den Radiallagersitzen 68 jeweils ein Lagersitzfreistich 70 angeordnet ist. Die Radiallagersitze 68 sind zylindrisch ausgebildet. Die Spindelmutter 12 ist einstückig ausgebildet.

Fig. 8 zeigt ein Getriebe 72 für eine Sitzlängsverstellvorrichtung für einen Kraftfahrzeugsitz. Das Getriebe 72 umfasst ein Getriebegehäuse 74 sowie die zuvor beschriebene Zahnradbaugruppe 10. In der Darstellung in Fig. 8 ist die Durchgangsbohrung 28 der Spindelmutter 12 sichtbar.

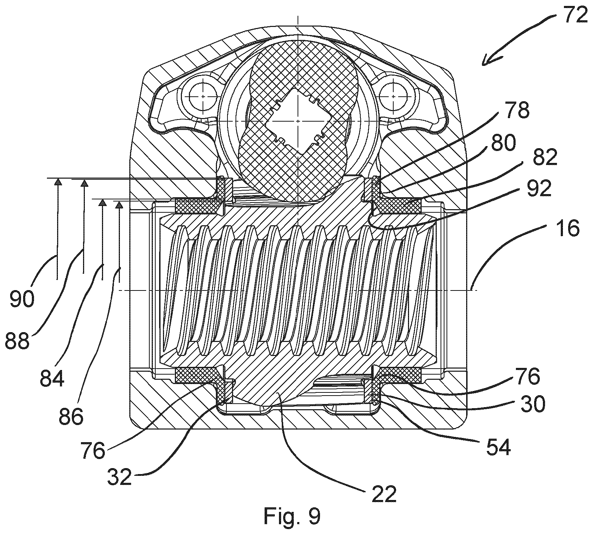

Wie die Schnittdarstellung in Fig. 9 zeigt, weist das Getriebe 72 zwei Gleitlager 76 auf. Jedes der Gleitlager 76 weist einen Axiallagerabschnitt 78 auf, der axial anliegend an der Anlauffläche 54 der jeweiligen Anlaufscheibe 30, 32 angeordnet ist. So können auf die Spindelmutter 12 wirkende Axialkräfte über die Anlaufscheiben 30, 32 und die Gleitlager 76 abgestützt werden. Dazu ist der jeweilige Axiallagerabschnitt 78 mit einer axial gegenüber der Anlauffläche 54 angeordneten Lagerrückseite 80 an dem Getriebegehäuse 74 angeordnet.

Darüber hinaus weisen die Gleitlager 76 jeweils einen rechtwinklig zu dem Axiallagerabschnitt 78 ausgebildeten Radiallagerabschnitt 82 auf, wobei der jeweilige Radiallagerabschnitt 82 anliegend an einen der Radiallagersitze 68 angeordnet ist. Dabei ist ein Axialinnendurchmesser 84 des Axiallagerabschnitts 78 größer/gleich einem Anlaufflächeninnendurchmesser 86 der Anlauffläche 54, und ein Axialaußendurchmesser 88 des Axiallagerabschnitts 78 ist kleiner/gleich einem Anlaufflächenaußendurchmesser 90 der Anlauffläche 54.

Der Axialinnendurchmesser 84 und der Axialaußendurchmesser 88 begrenzen dabei vorzugsweise die Kontaktflächen der Gleitlager 76, die für den Kontakt mit den Anlaufflächen 54 der Anlaufscheibe 30, 32 vorgesehen sind. Wie die Ansicht in Fig. 9 zeigt, sind die Gleitlager 76 im Halbschnitt jeweils L-förmig ausgebildet. Dabei sind der Radiallagerabschnitt 82 und der Axiallagerabschnitt 78 jeweils angrenzend an eine den Radiallagerabschnitt 82 mit dem Axiallagerabschnitt 78 verbindende Fase 92 angeordnet.

### Bezugszeichenliste

- 10: Zahnradbaugruppe
- 12: Spindelmutter
- 14: Zahnrad
- 16: Drehachse
- 18: Verzahnung
- 20: Umfangsrichtung
- 22: Zahn
- 24: Zahnlücke
- 26: Gewinde
- 28: Durchgangsbohrung
- 30: erste Anlaufscheibe
- 32: zweite Anlaufscheibe
- 34: erste Stirnseite
- 36: zweite Stirnseite
- 38: Aussparung
- 40: erster Abschnitt
- 42: zweiter Abschnitt
- 44: Kopfkreisdurchmesser
- 46: Fußkreisdurchmesser
- 48: Absatz
- 49: Absatzdurchmesser
- 50: Zahnhöhe
- 52: Absatzhöhe
- 54: Anlauffläche
- 56: Scheibenvorsprung
- 58: Vorsprungfreistich
- 60: Absatzbreite
- 62: Scheibenbreite
- 64: Vorsprungkontur
- 66: Lückenkontur
- 68: Radiallagersitz
- 70: Lagersitzfreistich
- 72: Getriebe
- 74: Getriebegehäuse
- 76: Gleitlager
- 78: Axiallagerabschnitt
- 80: Lagerrückseite
- 82: Radiallagerabschnitt
- 84: Axialinnendurchmesser
- 86: Anlaufflächeninnendurchmesser
- 88: Axialaußendurchmesser
- 90: Anlaufflächenaußendurchmesser
- 92: Fase

## Patentansprüche

1. Zahnradbaugruppe (10) mit einem Zahnrad (14) und mindestens einer Anlaufscheibe (30, 32) mit einer im Wesentlichen kreisringförmigen Anlauffläche (54), wobei das Zahnrad (14) eine Drehachse (16) und eine um die Drehachse (16) umlaufende Verzahnung (18) mit in einer Umfangsrichtung (20) um die Drehachse (16) abwechselnd angeordneten Zähnen (22) und Zahnlücken (24) aufweist, wobei die Verzahnung (18) mindestens eine axiale Stirnseite (34, 36) mit einer um die Drehachse (16) umlaufenden Aussparung (38) aufweist,
**dadurch gekennzeichnet, dass**
die mindestens eine Anlaufscheibe (30, 32) mindestens einen radial über die Anlauffläche (54) vorstehenden Scheibenvorsprung (56) aufweist, und derart in der Aussparung (38) angeordnet ist, dass der mindestens eine Scheibenvorsprung (56) jeweils in eine der Zahnlücken (24) radial eingreifend angeordnet ist.

2. Zahnradbaugruppe nach Anspruch 1,
**dadurch gekennzeichnet, dass**
die mindestens eine Stirnseite (34, 36) mindestens einen die Aussparung (38) radial begrenzenden Absatz (48) aufweist.

3. Zahnradbaugruppe nach Anspruch 2,
**dadurch gekennzeichnet, dass**
der mindestens eine Absatz (48) einen Absatzdurchmesser (49) aufweist, wobei der Absatzdurchmesser (49) kleiner als ein Kopfkreisdurchmesser (44) der Verzahnung (18) und größer als ein Fußkreisdurchmesser (46) der Verzahnung (18) ausgebildet ist.

4. Zahnradbaugruppe nach einem der Ansprüche 2 bis 3,
**dadurch gekennzeichnet, dass**
der mindestens eine Absatz (48) die Aussparung (38) radial nach innen und/oder die Aussparung (38) radial nach außen begrenzend angeordnet ist.

5. Zahnradbaugruppe nach einem der Ansprüche 2 bis 4,
**dadurch gekennzeichnet, dass**
die Verzahnung (18) eine Zahnhöhe (50) und der mindestens eine Absatz (48) eine Absatzhöhe (52) aufweist, wobei das Verhältnis der Absatzhöhe (52) zu der Zahnhöhe (50) 0,05 bis 0,3 und bevorzugt 0,05 bis 0,15 beträgt.

6. Zahnradbaugruppe nach einem der vorhergehenden Ansprüche, **dadurch gekennzeichnet, dass**
das Zahnrad (14) und die mindestens eine Anlaufscheibe (30, 32) miteinander ausschließlich formschlüssig wirkverbunden sind.

7. Zahnradbaugruppe nach einem der vorhergehenden Ansprüche, **dadurch gekennzeichnet, dass**
eine Vorsprungkontur (64) des mindestens einen Scheibenvorsprungs (56) zumindest abschnittsweise mathematisch ähnlich zu einer Lückenkontur (66) einer der Zahnlücken (24) ausgebildet ist.

8. Zahnradbaugruppe nach einem der vorhergehenden Ansprüche, **dadurch gekennzeichnet, dass**
die mindestens eine Anlaufscheibe (30, 32) mehrere Scheibenvorsprünge (56) aufweist.

9. Zahnradbaugruppe nach einem der vorhergehenden Ansprüche, **dadurch gekennzeichnet, dass**
das Zahnrad (14) mindestens einen zur Verzahnung (18) axial benachbart angeordneten Radiallagersitz (68) aufweist.

10. Zahnradbaugruppe nach einem der vorhergehenden Ansprüche, **dadurch gekennzeichnet, dass**
das Zahnrad (14) als Spindelmutter (12) ausgebildet ist.

11. Zahnradbaugruppe nach einem der vorhergehenden Ansprüche, **dadurch gekennzeichnet, dass**
eine erste Anlaufscheibe (30) der mindestens einen Anlaufscheibe (30, 32) an einer ersten Stirnseite (34) der mindestens einen Stirnseite (34, 36) angeordnet ist und eine zweite Anlaufscheibe (32) der mindestens einen Anlaufscheibe (30, 32) an einer zweiten Stirnseite (36) der mindestens einen Stirnseite (34, 36) angeordnet ist, wobei die zweite Stirnseite (36) der ersten Stirnseite (34) axial gegenüberliegend angeordnet ist.

12. Getriebe (72), insbesondere für eine Verstellvorrichtung für ein Kraftfahrzeug, mit einer Zahnradbaugruppe (10) nach einem der vorhergehenden Ansprüche.

13. Getriebe nach Anspruch 12,
**dadurch gekennzeichnet, dass**
das Getriebe (72) mindestens ein Gleitlager (76) aufweist, wobei das mindestens eine Gleitlager (76) einen Axiallagerabschnitt (78) aufweist, der axial anliegend an der Anlauffläche (54) der mindestens einen Anlaufscheibe (30, 32) angeordnet ist.

14. Getriebe nach einem der Ansprüche 12 bis 13, wobei die Zahnradbaugruppe gemäß Anspruch 9 ausgebildet ist,
**dadurch gekennzeichnet, dass**
das mindestens eine Gleitlager (76) einen rechtwinklig zu dem Axiallagerabschnitt (78) ausgebildeten Radiallagerabschnitt (82) aufweist, wobei der Radiallagerabschnitt (82) anliegend an dem Radiallagersitz (68) angeordnet ist, und wobei
• ein Axialinnendurchmesser (84) des Axiallagerabschnitts (78) größer/gleich einem Anlaufflächeninnendurchmesser (86) der Anlauffläche (54) ist, und/oder
• ein Axialaußendurchmesser (88) des Axiallagerabschnitts (78) kleiner/gleich einem Anlaufflächenaußendurchmesser (90) der Anlauffläche (54) ist.

15. Verstellvorrichtung für ein Kraftfahrzeug, insbesondere für einen Kraftfahrzeugsitz, mit einem Getriebe (72) nach einem der Ansprüche 12 bis 14.
